# EUROPEAN PATENT SPECIFICATION

(11) **EP 2 665 376 B1**
(45) Date of publication and mention of the grant of the patent: **28.02.2018**
(21) Application number: 11802695.4
(22) Date of filing: 15.12.2011
(51) Int. Cl.: A23L 29/212, A23L 29/238, A23L 29/269, A23L 29/281, A23L 23/10

(54) **SAVOURY FOOD CONCENTRATE**
PIKANTES LEBENSMITTELKONZENTRAT
CONCENTRÉ ALIMENTAIRE AROMATIQUE

(30) Priority: 17.01.2011 EP 11151163
(43) Date of publication of application: 27.11.2013
(73) Proprietor: Unilever N.V., 3013 AL Rotterdam (NL); Unilever PLC, London EC4Y 0DY (GB)
(72) Inventor: PERRINE, Marion, Esclarmonde, 74074 Heilbronn (DE); POPP, Alois, Konrad, NL-3133 AT Vlaardingen (NL); SAILER, Winfried, 74074 Heilbronn (DE); SILVA PAES, Sabrina, NL-3133 AT Vlaardingen (NL)
(74) Representative: Tjon, Hon Kong Guno
(86) International application number: PCT/EP2011/072857
(87) International publication number: WO 2012/097930

(56) References cited:
- WO-A1-03/015538
- WO-A1-2007/068402
- WO-A1-2011/076528
- DATABASE GNPD [Online] Mintel; Anonymous: "Pure Vegetable Stock", XP002654428, retrieved from www.gnpd.com Database accession no. 1305450
- Anonymous: "Knorr Bouillon Pur Huhn", , 12 November 2010 (2010-11-12), pages 1-4, XP002654429, Retrieved from the Internet: URL:http://www.ciao.de/Bouillon_Pur_Huhn__ Test_8669431 [retrieved on 2011-07-28]
- KATZBAUER B: "Properties and applications of xanthan gum", POLYMER DEGRADATION AND STABILITY, BARKING, GB, vol. 59, no. 1-3, 1 January 1998 (1998-01-01), pages 81-84, XP004294359, ISSN: 0141-3910, DOI: DOI:10.1016/S0141-3910(97)00180-8
- KOVACS P: "USEFUL INCOMPATIBILITY OF XANTHAN GUM WITH GALACTOMANNANS", FOOD TECHNOLOGY, INSTITUTE OF FOOD TECHNOLOGISTS, CHICAGO, IL, US, vol. 27, no. 3, 1 March 1975 (1975-03-01), pages 26-28,30, XP001057341, ISSN: 0015-6639
- GUNARATNE ET AL: "Thermal, pasting, and gelling properties of wheat and potato starches in the presence of sucrose, glucose, glycerol, and hydroxypropyl beta-cyclodextrin", CARBOHYDRATE POLYMERS, APPLIED SCIENCE PUBLISHERS, LTD. BARKING, GB, vol. 70, no. 1, 24 July 2007 (2007-07-24), pages 112-122, XP022166377, ISSN: 0144-8617, DOI: DOI:10.1016/J.CARBPOL.2007.03.011
- YOSHIMURA M ET AL: "Rheological studies on mixtures of corn starch and konjac-glucomannan", CARBOHYDRATE POLYMERS, APPLIED SCIENCE PUBLISHERS, LTD. BARKING, GB, vol. 35, no. 1-2, 2 January 1998 (1998-01-02), pages 71-79, XP004126955, ISSN: 0144-8617, DOI: DOI:10.1016/S0144-8617(97)00232-4

## Description

The present invention relates to a savoury food concentrate in the form of a gel. It further relates to a process to prepare said savoury food concentrate. It further relates to the use of said savoury food concentrate for preparing a ready to eat food product, and to a method to produce a ready to eat food product.

### Background of the invention

Concentrates for non-sweet, savoury food applications such as for example soups, sauces or gravies, which concentrates are in the form of a gel are known. They have been described in the art as alternatives for dry concentrates, for example stock cubes, and for liquid concentrates. Concentrates in the form of a gel share the advantage with dry concentrates (stock cubes) of allowing unit dosing. With liquid concentrates they share the advantage that they allow incorporation of liquid ingredients and moist containing particles. Next to this advantage, savoury concentrates in the form of a gel resemble much more the natural appearance of home-made savoury food products. Home-made ready-to-eat savoury food products like soups, sauces or gravies can traditionally be made using meat and bones. After cooling down a home-made soup or gravy, these products often tend to gelatinize or solidify, at least in some extent, and in this way may have the appearance of a jelly, showing a smooth and glossy surface. Moreover, a further advantage of concentrates in the form of a gel, which is highly appreciated by consumers, is that the elasticity of a gel cues freshness, in contrast to a dry or pasty format. Consumers like that a product "sets back" once pressed, showing elasticity, like a gel. This is often associated with fresh food of high quality (e.g. fresh fish, liver, meat), whereas a hard or pasty texture may be associated with non-fresh products that might have dried out.

Savoury applications of particular interest are gravies, viscous soups and sauces. A thickened texture in the gravy or sauce is often appreciated by consumers. In home-made gravies this thickening effect might be reached by ingredients from the meat, like fat or proteins from the bones. It may also be reached by addition of binder materials, such as for example starch or flour, which after gelatinization of the starch shows a thickening effect in the gravy. The use of dry, instant binder granules which comprise for example starch to provide a thickened texture to a sauce or a gravy is common practice as well. Conventional salt contents in this types of products is often between 5 and17g/liter, while the starch content is often between 10-40g/liter.

An ambient stable concentrate in the form of a gel for preparing a soup, sauce or a gravy has been described in for example WO2007/068484. The viscosity provided to the ready-to-eat product by the products described in this patent application after dissolution, was limited, if present at all. It was observed that when starch was added to the concentrate in the form of a gel, which contributes to an unctuous texture and/or viscosity increase in the diluted product, the quality of the concentrate in the form of a gel reduced. In the presence of starch, the gel structure of the concentrate was compromised, or even lost, resulting in a paste texture. Moreover, after opening of the packaging, the smooth and glossy appearance reduced or even disappeared during storage. The conventional salt-stabilized ambient stable food concentrates in the form of a gel did not allow addition of starch in an amount required to provide a desired viscosity increase in the ready-to-eat product after dissolution, while keeping the gel texture of the concentrated product and while still providing conventional saltiness to the ready to eat product after dissolution.

A further problem was the production of an ambient stable food concentrate in the form of a gel comprising starch and which provides viscosity upon dilution. Conventional processes to provide a food concentrate in the form of a gel comprise a step wherein the gelling agents are heated above their activation temperature. Cooling of the mixture results in a gel. It turned out that the conventional process is not suitable to prepare the product of the invention. The high temperature required for the activation of the gelling agents often leads to starch swelling resulting into a dramatically increase of viscosity during the process and lower processability. Moreover swelling during the process has a negative effect on the gel structure of the final product, may be detrimental to the dissolution properties and doesn't allow the necessary increase of viscosity during the preparation of the ready-to-eat food product.

Another problem of a food concentrate in the form of a gel comprising a relatively high amount of starch is a relatively worse spoonability, as the texture of the product becomes harder or stickier in the presence of relatively high amounts of fine, non-dissolvable material, such as starch. Good spoonability is an important usage property particularly in the case of multidose formats.

Therefore, a need exists for a food concentrate in the form of a gel which is ambient stable and which comprises sufficient salt to provide a conventional saltiness in the ready-to-eat food product resulting after dissolution, and which comprises sufficient starch to provide a viscosity increase in the ready-to-eat food product resulting after dissolution, and wherein the gel structure, the spoonability and preferably the glossy surface of the concentrate are maintained, even after the packaging has been opened.

### Summary of the invention

Surprisingly, the above mentioned problems were, at least partly, solved by a packaged food concentrate in the form of a gel comprising, based on the weight of the total food concentrate without the packaging:
- from 2 wt% to 15 wt% of NaCl,
- water,
- an effective amount of gelling agent,
- from 5 wt% to 60 wt% of a liquid polyol,
- non-gelatinised starch.
wherein the gelling agent is present in an amount of from 0.1 to 20 wt%, based on the weight of the water and liquid polyol content taken together. The invention further relates to a process for preparing a packaged food concentrate in the form of a gel, comprising
- from 2 wt% to 15 wt% of NaCl,
- water,
- an effective amount of gelling agent,
- from 5 wt% to 60 wt% of a liquid polyol,
- non-gelatinised starch,
the process comprising the steps of:
a) preparing a mixture comprising:
   - water,
   - an effective amount of gelling agent,
b) activating the gelling agent,
c) adding the non-gelatinised starch to the mixture at a temperature of the mixture which is lower than the gelatinisation temperature of the non-gelatinised starch,
d) adding NaCl in a total amount of from 2 wt% to 15 wt%, and liquid polyol in a total amount of from 5 wt% to 60 wt%, to the mixture at anyone of steps a) to c)
e) allow setting of the mixture resulting from step d),
f) filling a packaging with the mixture resulting from step d),
to form a packaged food concentrate in the form of a gel.

The invention further relates to the use of the packaged concentrate of the present invention to prepare a sauce or a gravy or soup.

The present invention further relates to a process to provide a liquid ready-to-eat food product, comprising the steps of:
a) providing a packaged food concentrate of the present invention,
b) removing at least part of the packaged food concentrate from its packaging,
c) dissolving at least part of the food concentrate in an aqueous liquid to result in a mixture,
d) heating the mixture resulting from step c) at a temperature higher than the melting temperature of the gelling agent and higher than the gelatinisation temperature of the starch, achieving a viscosity increase of the mixture,
to result in a liquid ready to eat food product.

The present invention further relates to a ready-to-eat liquid food product obtainable by the process according to the invention.

### Detailed description of the invention

### Gel

The present invention relates to a packaged food concentrate in the form of a gel. In the context of the present invention, a gel should be understood as a texture that is substantially shape stable at 20 degrees Celsius and is elastic, after removal from the packaging. Due to gravity, a relatively weak gel might (slightly) deform, after removal from its packaging. The form of a gel generally can be achieved in an aqueous environment when sufficient gelling agent is used in the formulation. For the present invention, a too rigid gel is not preferred, as this may impair the easy removal from the packaging or the spoonability when the product is packaged in a multidose packaging, like jar. The gel structure should allow removal from a plastic tub preferably without significant damage, possibly with the help of a spoon. A gel shows elastic deformation. This type of deformation is to a large extent reversible. For example, after reducing deforming pressure, e.g. from gravity or gentle pressure by a finger, the shape will reform to a large extent to its original form. In addition, at 20° C, a gel in the context of the present invention does not flow, like a liquid. Further, at ambient temperatures (e.g. at 20° C), after cutting of the gel in some pieces, the pieces of gel cannot be substantially adhered and united by simple re-assembling of the gel pieces, to form the original volume of the gel.
In contrast to a gel, a paste does not show elastic deformation but shows a plastic deformation behavior, at least, the plastic deformation is (much) higher than the elastic deformation. Thus, after deformation by pressure, a paste will hardly return towards its original shape, if at all. Also liquid products neither show elastic deformation, nor are they shape stable after removal from the package. It is therefore in the normal skill of the artisan, to assess whether a product is a gel or not.

The texture of a gel can preferably be assessed in the following manner, using a texture analysis machine (TAX-T2) of Stable Micro Systems. The method is based on a standard measurement called TPA (Texture Profile Analysis), as known for a skilled person and as described for example in "Gums and Stabilisers for the Food Industry 6", edited by G.O. Phillips, P.A. Williams and D.J. Wedlock (published by Oxford University Press, 1992). The product with minimum dimensions of 45 mm length / 30 mm width / 10 mm height, in the packaging (e.g. a plastic tub), is punched twice with a 5 mm diameter spherical (ball) probe (P/5S, stainless steel), to create a small deformation of the surface of the product by 2,5 mm. The TA-parameters are: Pre-speed 1 mm/s, Test speed 0.5 mm/s, Post-Test speed 1mm/s, Distance 2.5 mm, Second Distance 2.5 mm, Trigger Auto, Trigger Force 0.0 g, Trigger Distance 0.1 mm. For a gel, the force required for the second deformation step is close to the force required for the first deformation step. This is because of the elastic character of a gel. For a paste (which is not liquid), the force required for the second deformation step will be significantly lower, as in a paste the elasticity is low, if not absent. The time between the two measurements points is sufficient to allow a possible reformation of the gel structure after the first deformation. Typically, the time between the measurements is 10 seconds. For a gel, typically the force required for the second deformation is higher than 85%, preferably higher than 87%, most preferably higher than 90% of the force required for the first deformation.

To enable easy removal from the packaging, the concentrate is preferably not too hard.
Preferably, the hardness of a gel, and of the food concentrate of the present invention, is higher than 10 g, more preferably higher than 15 g, even more preferably higher than 20 g, most preferably higher than 30 g; and is preferably lower than 1500 g, more preferably lower than 500 g, even more preferably lower than 100 g, most preferably lower than 80 g. The hardness or gel strength is measured by a texture analysis, using the following method:
A texture analyser from Microstable Sytems, model TAXT2 with 5 kg load cell is used. A plunger is applied with the following characteristics: diameter (according to AOAC method): 0.5 inches, means 12.7 mm, height 35 mm, plane surface, sharp edges, plastics material. The sample containers may have an influence on the measured results, therefore, the chosen container should always be of the same dimensions. In this analysis, plastic (PP) containers are used with the following dimensions: diameter bottom 5 cm; diameter top 6.3 cm; height of the container: 7.3 cm; Filling height: 5 cm). After preparation, samples are filled into the container at a temperature higher than the gelling point of the gelling agent but lower than the gelatinisation temperature of the starch. The sample is stored at 5°C to allow quick gelling, within 24 hours. Measurements are done within 1 week after preparation and the product has to be at 20°C at least 24 hours before measurement. The TA-parameters are: Pre speed 1 mm/s, Test speed 0.5 mm/s, Re speed 10 mm/s, Distance 15 mm, Trigger Auto, Force 0.5 g, Recording is stopped at target. The measured result taken from the recorded graph is the force at 10 mm penetration depth, expressed in grams.

The present invention relates to a food concentrate. A concentrate is a food product that is usually diluted before consumption. In this way, it should be discriminated from a read-to-eat product, which is normally consumed as such, without dilution. To enable dilution of the concentrate of the present invention, the concentrate should be dissolvable in hot water, preferably at for example 90°C. Dissolvability should be preferably relatively fast, to prevent undesired formation of lumps of gelatinized starch in the gel structure which is not yet completely dissolved. Preferably a concentrate according to the present invention with a size of 37g dissolves in 250 ml water of 90°C, using stirring, e.g. by using wire whisk, in a time period of less than 4 minutes, more preferably less than 3 minutes. This is the way a consumer would normally use the product of the invention. As the concentrate of the present invention is a concentrated product, it should allow dilution of between 2 to 40 times, preferably of between 3 and 20 times, more preferably of between 4 and 10 times, based on the weight of the product. Higher dilution ratios are not preferred, as they may require a higher salt content and a higher starch content in the concentrated product, which as a consequence might compromise its gel texture and even turn the concentrate into a paste.

The surface of the gel is preferably not showing a dried-out appearance after opening of the packaging, but preferably maintains its smooth, glossy appearance.

### Salt

The food concentrate according to the invention is preferably a savoury food concentrate. Savoury should be understood as not tasting sweet in the end application (soup, gravy or sauce), but rather having a salty and/or umami taste. Sweet (ready to eat) products in the form of a gel in general do not contain salt in an amount of from 2 wt% to 15 wt%. The food concentrate according to the invention comprises NaCl. Preferably, the NaCl is present in an amount of more than 2 wt%, preferably more than 3 wt%, most preferably more than 4 wt%. The amount of NaCl is preferably less than 15 wt%, more preferably less than 12 wt%, and most preferably less than 10 wt%, based on the weight of the total concentrated food product. NaCl is present in an amount of from 2 wt% to 15 wt%, more preferably in an amount of from 3 wt% to 12 wt%, most preferably in an amount of from 4 to 10 wt% based on the weight of the total concentrated food product.
Preferably, NaCl is present in an amount of higher than 5 %, more preferably higher than 10 wt% even more preferably higher than 12 wt%, and most preferably higher than 15 wt% and preferably lower than 35 wt%, more preferably lower than 30 wt%, or even more preferably lower than 25 wt%, based on the weight of the water content. Hence, preferably, NaCl may be present in an amount of from 5 to 35wt%, more preferably of from 10 to 30 wt%, most preferably of from 15 to 25wt%, based on the weight of the water content. Water content should be construed as the total amount of water in the food concentrate. The amount of salt wt% based on the weight of the water content is calculated as (amount of salt (g)) / (amount of salt (g) + amount of water (g))) x 100%.

### Water

The concentrate further comprises water. Water is preferably present in an amount, based on the weight of the total concentrate, of more than 20 wt%, more preferably of more than 25 wt%, most preferably of more than 30 wt%. It is preferably present in an amount of less than 45 wt%, more preferably less than 43 wt%, most preferably less than 40 wt%. Hence, preferably, the amount of water is from 20 wt% to 45 wt%, more preferably from 25 wt% to 43 wt%, most preferably from 30 wt% to 40 wt%.
The food concentrate of the present invention is an ambient stable product. The water activity (Aw) of the concentrate of the present invention is preferably lower than 0.80, more preferably lower than 0.78, most preferably lower than 0.76. It is preferably higher than 0.5, more preferably higher than 0.6, most preferably higher than 0.65. Hence, preferably, the food concentrate of the present invention has a water activity of between 0.5 and 0.8, more preferably of between 0.6 and 0.78, most preferably of between 0.65 and 0.76. Especially at these water activities, it appeared to be complicated to prepare a concentrate with the desired, relatively high, amounts of starch.

### Gelling agent

The food concentrate of the present invention comprises a gelling agent in an effective amount. The gelling agent might be any gelling agent, which is suitable to provide a gel structure in the food concentrate of the present invention and can be used in the field of food products. A gelling agent requires activation, which is often effected for example by a heating step. "Effective amount" should be interpreted here as the amount suitable to form a gel with a texture as described above, i.e. shape stable after removal from the packaging, showing elastic deformation and not too hard to allow relatively easy removal from a packaging. Although the amount of gelling agent might depend on the type of gelling agent and the salt content that is used, it is in the art of the skilled person to determine relatively easily the appropriate amount of gelling agent to provide a food concentrate in the form of a gel. For example, when gelatin is used as a gelling agent, a relatively high amount of gelling agent is preferred to provide a gel with the desired features. When polysaccharide hydrocolloids are used as a gelling agent, relatively low amounts are preferred. The total amount of gelling agent present in the concentrate of the present invention is from 0.1 to 20 w%, more preferably of from 0.5 wt% to 15 wt%, more preferably 0.5 wt% to 10 wt%, more preferably 0.5 to 5 wt%, more preferably, 0.5 to 3 wt% based on the weight of the water and liquid polyol contents taken together. The amount of gelling agent (wt%) is calculated as (amount of gelling agent (g)) / (amount of gelling agent (g) + amount of water (g) + amount of liquid polyol (g))) x 100%.
In the context of the present invention, the term gelling agent is not limited to one gelling agent, but can also be a mixture of two or more gelling agents, each as such not necessarily able to provide a gel on its own, provided together they can form a gel when dissolved and activated in a liquid. A gelling agent can in particular refer to a mixture of gelling and/or thickening agents that in combination form an improved gelling system compared to the individual compounds on their own. For example, "galactomannan in combination with xanthan gum" is referred to here as "gelling agent" or "individual gelling agent". "Thickening agent" is an ingredient that, when activated, provides a viscosity increase in a liquid. Examples are xanthan gum, locust bean gum or guar gum. The terms "gelling agent" and "thickening agent" are not mutually exclusive and can refer to the same ingredient, depending on the individual circumstances of the composition.

Preferably, the present invention relates to a food concentrate comprising a gelling agent, wherein the gelling agent is selected from the group consisting of gelatine, agar-agar, pectin, glucomannan, carrageenan, galactomannan in combination with xanthan gum, glucomannan in combination with xanthan gum, glucomannan in combination with carrageenan, glucomannan in combination with agar-agar, galactomannan in combination with carrageenan, galactomannan in combination with agar agar, and mixtures thereof.

Preferably, at least one of the individual gelling agents of this list, when present, is present in an amount of at least 30 wt%, preferably at least 50 wt%, more preferably at least 75 wt%, even more preferably at least 90 wt% based on the weight of the total amount of gelling agent and thickening agent present in the food concentrate.

Preferably, the gelling agent comprises, more preferably is a polysaccharide hydrocolloid gelling agent. The polysaccharide hydrocolloid gelling agent is preferably present in a total amount of from 0.1 wt% to 15 wt%, more preferably of from 0.3 wt% to 7 wt%, even more preferably of from 0.4 wt% to 5 wt%., even more preferably in an amount of from 0.5 to 4 wt%, most preferably in an amount of from 0.6 to 3 wt% based on the weight of the water and liquid polyol content taken together. Preferably, a polysaccharide hydrocolloid gelling agent is present in an amount of at least 30 wt%, preferably at least 50 wt%, more preferably at least 75 wt%, even more preferably at least 90 wt% based on the weight of the total amount of gelling agent and thickening agent present in the food concentrate.

When the gelling agent is gelatin or comprises gelatin, gelatin is preferably present in an amount of form 0.5 wt% to 30 wt%, more preferably of from 1 wt% to 20 wt%, even more preferably of from 1.5 wt% to 15 wt%, even more preferably from 2 to 10 wt%, most preferably of from 2 to 5 wt%, based on the weight of the water content and liquid polyol content taken together.

A preferred class of gelling agents comprises an interactive combination of gums. The present invention preferably relates to a food concentrate in the form of a gel, wherein the gelling agent is selected from the group consisting of: galactomannan in combination with xanthan gum, glucomannan in combination with xanthan gum, galactomannan in combination with carrageenan, glucomannan in combination with carrageenan, agar-agar in combination with galactomannan and mixtures thereof. Preferably, such a gelling agent is present in a total amount of from 0.1 wt% to 20 wt%, more preferably of from 0.3 wt% to 10 wt%, even more preferably of from 0.5 wt% to 5 wt%., even more preferably in an amount of from 0.5 to 4 wt%, most preferably in an amount of from 0.6 to 3 wt% based on the weight of the water and liquid polyol content taken together. Preferably, an individual gelling agent from this group, is present in an amount of at least 30 wt%, preferably at least 50 wt%, more preferably at least 75 wt%, even more preferably at least 90 wt%, based on the weight of the total amount of gelling agent and thickening agent present in the concentrate.

Preferably, the gelling agent is selected from the group of a combination of xanthan gum with a glucomannan, a combination of xanthan gum with a galactomannan, gelatin, and mixtures thereof. More preferably, the gelling agent is selected from the group of a combination of xanthan gum with a glucomannan, a combination of xanthan gum with a galactomannan, and mixtures thereof.
The gelling agents of the latter group showed good resistance to relatively high salt contents, preferably in terms of shape stability, gel strength and/or low level of syneresis. A high salt content should be interpreted as from 15 wt% to 30 wt%, preferably of from 20 to 26 wt% based on the amount of water. Preferably the gelling agents of these preferred groups are present in an amount of at least 30 wt%, preferably at least 50 wt%, more preferably at least 75 wt%, even more preferably at least 90 wt% based on the weight of the total amount of gelling agent and thickening agent present in the food concentrate.
Preferably, the galactomannan as used in combination with xanthan gum is selected from the group consisting of: locust bean gum, carob flour, guar gum, fenugreek gum, tara gum, cassia gum, and mixtures thereof. Examples of preferred glucomannans used in combination with xanthan are konjac mannan, konjac flour and mixtures thereof. More preferably, the gelling agent is a gelling agent selected from the group consisting of the combination of xanthan gum with locust bean gum, the combination of xanthan gum with guar gum, and mixtures thereof. Most preferably, the gelling agent is the combination of xanthan gum with locust bean gum. Locust bean gum showed optimal results in terms of gel strength and reduced syneresis. A gelling agent comprising agar-agar may in some compositions be less preferred, for example because agar-agar requires relatively high activation temperatures. Preferably, any of these preferred gelling agents is present in a total amount of from 0.1 wt% to 20 wt%, more preferably of from 0.3 wt% to 10 wt%, even more preferably of from 0.5 wt% to 5 wt%., even more preferably in an amount of from 0.5 to 2 wt%, most preferably in an amount of from 0.6 to 1.5 wt% based on the weight of the water and liquid polyol content taken together. Preferably, any of these preferred groups of gelling agents, more preferably, any of the individual gelling agents are present in an amount of at least 30 wt%, preferably at least 50 wt%, more preferably at least 75 wt%, even more preferably at least 90 wt% based on the weight of the total amount of gelling agent and thickening agent present in the food concentrate.

Preferably, xanthan gum is combined with a galactomannan or a glucomannan in a weight ratio of xanthan gum: glucomannan or xanthan gum : galactomannan of between 90:10 to 10:90, more preferably of from 85:15 to 15:85, even more preferably of from 80:20 to 20:80, even more preferably, of from 75:25 to 25:75.

Preferably, when carrageenan and agar-agar are used in a combination with a galactomannan or a glucomannan, the same preferred ratio's with a galactomannan or a glucomannan may apply as for xanthan gum with a galactomannan or glucomannan.

### Starch

According to the present invention, the concentrate in the form of a gel comprises non-gelatinised starch. Preferably, the concentrate comprises non-gelatinized starch in an amount of from 10 to 50wt%, based on the weight of the total concentrate, without packaging. The non-gelatinised starch results in the viscosity increasing effect upon dilution in hot liquid. The amount of non-gelatinised starch is preferably more than 12 wt%, more preferably more than 15 wt%, and is preferably less than 40 wt%, more preferably less than 35%, more preferably less than 30wt%, based on the weight of the total concentrate. The amount of non-gelatinised starch can be preferably from 12 to 40 wt%, more preferably of from 15 to 35 wt%, most preferably from 15 to 30 wt%, based on the weight of the total concentrate. Within the preferred range, especially in the range of from 15 to 30wt% the effect of the present invention is optimal. Especially amounts of starch higher than 10% led to complications or where not possible to incorporate in a conventional concentrate in the form of a gel, within the given salt content and the desired water activity of lower than 0.8. Although starch may contain some water, in the present invention the amounts of starch are calculated as dry matter of starch.

To provide the desired binding effect while still providing the desired saltiness upon dilution, the ratio of non-gelatinised starch to salt is preferably between 0.8:1 and 10:1, more preferably of between 1:1 and 8:1, even more preferred between 1.5:1 and 6:1, most preferred between 2:1 and 4:1.
This ratio should be interpreted that at relatively high salt levels, the lower ratio's may be preferred (for example 1:1), whereas at lower salt levels, the high ratio's might be preferred used.

Non-gelatinised starch can be both native starch or modified starch or a mixture thereof. Modified starch preferably is physically or chemically modified starch. Non-gelatinized starch is also described in literature as "unswollen starch". The non-gelatinized starch is in general composed of crystalline parts of amylopectin and amorphous amylase characterized by a birefringence, when seen under microscopy. A Maltese cross pattern can be seen under polarized light when a starch granule is non-gelatinized. When gelatinization occurs, starch granules gradually lose their birefringence due to the disruption of their crystalline structure. This technique is well-known to the skilled person, for example from ANTEC 2010 Plastics: Annual Technical Conference Proceedings, published by Society of Plastics Engineers. Pregelatinized starch or flour would result in thick paste and dissolvability is bad. Preferably, non-gelatinised starch in the context of the present invention is selected from the group consisting of wheat starch, potato starch, tapioca starch, corn starch, pulses starch, rice starch, sago starch, cassava starch, yam starch, arrow root starch, and mixtures thereof. More preferably, the starch is one of the starches selected from the group consisting of corn starch, sago starch, yam starch, arrow root starch and mixtures thereof. The latter types of starch showed particularly good results because of their higher gelatinization temperature .The starch can also be added in the form of flour.
The starch is preferable a non-dried starch with a water activity in the range of from 0.55 to 0.65 to avoid mass transfer from gel matrix to starch which may detriment the gel structure.

The non-gelatinised starch can be present in the form of a fine powder or in the form of more coarse particles such as for example agglomerates or pearls comprising non-gelatinised starch and/or flour. Preferably, the non-gelatinised starch is homogenously dispersed in the food concentrate. The non-gelatinised starch and flour is preferably present in particles with a particle size of more than 1µm, preferably of more than 5µm, and preferably less than 5 mm, more preferably less than 3 mm, even more preferably less than 1mm and most preferably less than 200 µm. Relatively large starch granules or agglomerates of starch granules may provide the advantage that the exchange surface between starch particles and the gel matrix is lowered, which may contribute to a more stabilized gel structure. When a relatively high starch content is desired, the use of starch which is at least partly in the form of agglomerates might be preferred. The use of relatively large starch particles, like agglomerates, may require an adapted production process, to keep the particles intact during production of the concentrate. It may be preferred to coat the relatively large particles, such as agglomerates, for example by fat, to maintain their integrity during processing.

### Liquid polyol

A polyol (polyhydric alcohol or sugar alcohol) is commonly known in the art as an alcohol containing multiple hydroxyl groups. It is thus a hydrogenated form of a carbohydrate. A polyol is different from a fat. A fat is not a carbohydrate, a fat molecule is either a mono-, di-, or triacylglyceride and thus a different chemical substance. In order to obtain a glycerol molecule from a fat molecule, a very energy-consuming chemical reaction has to be initiated (hydrolysis), breaking covalent bonds of the fat molecule, splitting it into glycerol and free fatty acids in the presence of water. Both the free fatty acids as well as the glycerol covalently bind to hydrogen from water and are thus different chemical substances than the fat, with different chemical structure and physic-chemical properties. Thus, a fat molecule therefore is not a liquid polyol as these have a different chemical structure from liquid polyols, with different physico-chemical properties (e.g. solubility in water). Also, their taste is very different, a polyol is predominantly tasted sweet while a fat is not. Therefore, a fat molecule also does not contain a liquid polyol. In a fat molecule at least one, but in general three of the hydroxyl groups of a possible former glycerol molecule are esterified with a fatty acid.

In the present invention, the liquid polyol is preferably a food-grade liquid polyol. Preferably, the liquid polyol is selected from the group consisting of glycerol, polypropylene glycol, tri-acetate and mixtures thereof. More preferably, liquid polyol is selected from the group of glycerol, polypropylene glycol and mixtures thereof. Most preferably, the liquid polyol is glycerol. The liquid polyol is preferably present in an amount of more than 5 wt%, more preferably more than 10wt%, even more preferably more than 12wt%, based on the weight of the total concentrate in the form of a gel. Preferably, the amount of liquid polyol is less than 60wt%, more preferably less than 50wt%, even more preferably, less than 30wt%, most preferably less than 25 wt% based on the total weight of the concentrate. The liquid polyol is present in an amount of from 5 to 60wt%, preferably of from 10 to 50 wt%, even more preferably of from 10 to 30 wt% most preferably of from 12 to 25 wt%, based on the weight of the total concentrate in the form of a gel. Addition of polypropylene glycol could increase microbiological stability of the gel at an Aw higher 0.70.

Preferably the total amount of liquid polyol and water together is more than 40 wt%, more preferably more than 45 wt% and preferably less than 85 wt%, more preferably less than 75 wt%, most preferably less than 65 wt%, based on the weight of the total concentrate. The total amount of liquid polyol and water together is preferably between 40 wt% and 85 wt%, more preferably between 45 wt% and 75 wt%, most preferably between 45 wt% and 65 wt%, based on the weight of the total concentrate (without the packaging).

Preferably the amount of liquid polyol is lower than the amount of water. In some cases, e.g. at low water contents such as of between 20 wt% and 30 wt%, the liquid polyol is preferably present in a relatively high amount, to achieve a total amount of liquid polyol and water together of more than 70 wt%, preferably more than 75 wt%, most preferably more than 80 wt%, and less than 85 wt%.

### Taste imparting components and colourants

The concentrate of the present invention preferably comprises taste imparting components, like flavours, yeast extract, spices, vegetable, meat, fish, meat extracts, fats, oils, and/or flavour enhancer like monosodium glutamate, nucleotides, maltodextrins, glucose syrups and organic acids. It may further comprise colourants Taste imparting components and colourants can be added in powdery form, like for example, vegetable powder, yeast extract but also as liquid or pasty extracts. Taste imparting ingredients and colourants are preferably present in an amount of from 0.1 to 30 wt%, more preferably of from 2 to 25 wt%, most preferably of from 5 to 20 wt%. Fat may be present in an amount of preferably from 0.1 to 10 w%, more preferably from 0.5 to 8 wt%, most preferably of from 1 to 5 wt%. In general, a low fat content is desired, as higher fat levels might compromise the gel texture. The skilled man will understand that in case it is desired to add a relatively high amount of starch, the amount of other dry, undissolvable matter, such as undissolvable taste imparting ingredients or undissolvable colourants in powdery form are preferably minimal, not to compromise the gel texture of the concentrate. Relatively low amounts of starch allow incorporation of higher amounts of other dry matter like flavours and colourant powders.

### Preservatives

It might be preferred that the food concentrate of the present invention comprises microbiological active ingredients, like preservatives or acids. Preservatives or acids may be for example lactic acids, potassium sorbate or benzoate.

### Weight

The weight of the concentrate in the form of a gel according to the present invention is preferably more than 2 g, preferably more than 10 g, even more preferably more than 20 g, most preferably higher than 25 g and preferably less than 10 kg, more preferably less than 1kg, even more preferably less than 500 g, even more preferably less than 300 g, even more preferably less than 100 g, most preferably less than 50g. Concentrates with a size of from 2 g to 300 g, preferably of from 10 g to 100 g, most preferably of from 20 g to 50 g are in particular suitable for, but not limited to, unit dosing and are preferably designed for single use. The relatively small formats showed optimal dissolution behavior, and reduced risk for lump formation as a consequence of gelatinization of starch, when the concentrate has not well dissolved or dispersed in the dissolution liquid yet.
The concentrate can also be a multi-dosing format, although the format is not limited to this. In this case the consumer can dissolve only part of the concentrate of the invention in an appropriate amount of liquid, by for example using a spoon or other suitable utensil. In case of a multi-dose format, the weight of the concentrate can preferably be from 80 g to 1kg, more preferably from 100 g to 850 g. An advantage of the present invention which has been proved particularly advantageous for a multi-dose format was that the surface of the concentrate maintains a glossy, fresh appearance during open shelf storage.

Preferably the packaged savoury food concentrate according to the invention is a concentrate for a soup, a sauce or a gravy, preferably for a viscous sauce or a viscous gravy.

### Process

In a further aspect, the invention relates to a process for preparing a packaged savoury food concentrate in the form of a gel, comprising
- from 2 wt% to 15 wt% of NaCl,
- water,
- an effective amount of gelling agent,
- from 5 wt% to 60 wt% of a liquid polyol,
- non-gelatinised starch,
the process comprising the steps of:
a) preparing a mixture comprising:
   - water,
   - an effective amount of gelling agent,
b) activating the gelling agent,
c) adding the non-gelatinised starch to the mixture at a temperature of the mixture which is lower than the gelatinisation temperature of the non-gelatinised starch,
d) adding NaCl in a total amount of from 2 wt% to 15 wt%, and liquid polyol in a total amount of from 5 wt% to 60 wt%, to the mixture at anyone of steps a) to c),
e) allow setting of the mixture resulting from step d),
f) filling a package with the mixture resulting from step d),
to form a packaged food concentrate in the form of a gel.

In a first step a), a mixture is provided comprising the gelling agent and at least part of the water. Preferably, in step a) all the water and liquid polyol is present, to provide optimal activation of the gelling agent in step b).

In step b) the gelling agent is activated. Preferably the gelling agent is activated by heating, in case the gelling agent requires heat activation. It is known in the art which gelling agents require heat-activation and which do not. An example of a gelling agent that may not require heat activation is gelatin. Although the temperature of the heating step might depend on the gelling agent that has been chosen, the temperature is preferably higher than 70 °C, more preferably higher than 75 °C, most preferably higher than 80 °C, and preferably less than 105 °C, more preferably less than 100 °C, most preferably less than 90 °C. Heating of the mixture of step a) results in dissolving of the gelling agent and activating it to allow gelling after cooling, e.g. during step e) of the process. Preferably step b) involves a heating step. Such a heating step preferably provides pasteurization to the mixture. It might be preferred to use high shear mixing at a temperature above the activation temperature of the gelling agent to provide optimal activation of the gelling agent, for example when the gelling agent is a combination of galactomanan with xanthan gum. When the gelling agent is gelatin, the temperature during activation of the gelling agent preferably is between 20 °C and 95 °C, more preferably between 40 °C and 90 °C, most preferably between 45°C and 75°C.
In case a heating step is conducted to activate the gelling agents, the mixture resulting from step b) is cooled or allowed to cool to a temperature that is lower than the gelatinization temperature of the starch to be used. Preferably, the temperature of the mixture should not be lower than the gellation temperature of the gelling agent, as this may result in gel formation and might compromise mixing of the starch into the mixture, or could even destroy the gel texture to be formed.
Cooling might be carried out by a cooling device like a tube-in-tube heat exchanger, as known in the art, but might also be suitably done by allowing the mixture to cool in the processing vessel.

In step c) the non-gelatinised starch is added to the mixture. This can be suitably done by mixing the non-gelatinised starch into the mixture resulting from step b), preferably by a mixing device. It might be preferred that high-shear mixing is applied and preferably, mixing is carried out while applying low air pressure or vacuum treatment, to reduce air bubble formation during mixing. Applied high shear stress is preferably limited to a minimum, for example only to guarantee homogeneous starch distribution, but unnecessary stress to the gel, especially when starch is added close to the gelling point of the gel system, is preferably avoided. In case the gellation temperature of the starch is higher than the temperature which is necessary to activate the gelling agent, which may happen when the gelling agent is gelatine for example, it may be possible to add the starch before step b).
Preferably, the non-gelatinised starch is added at a temperature of the mixture which is lower than the gelatinization temperature of the non-gelatinised starch and higher than the gelling temperature of the gelling agent, i.e. the temperature at which the gel solidifies. Depending on the gelling agent and the type of starch that is used, the temperature might preferably be higher than 30 °C, more preferably higher than 40 °C, even more preferably higher than 55 °C, and preferably lower than 90 °C, more preferably lower than 80 °C, even more preferably lower than 70 °C.
It is preferred that the heat transfer medium does not have a temperature higher than the gelatinization temperature of the starch. The preferred heat transfer medium is water and preferably not steam, to prevent hot spots. The temperature at which the non-gelatinised starch is added can depend on the type of starch used and the salt content of the mixture. Some starches gelatinize at 55°C, whereas other starches gelatinize only at 85°C, as is well known to the person skilled in the art. The use of liquid polyol surprisingly showed advantageous during production of the food concentrate of the present invention, as it allowed addition of non-gelatinised starch at higher temperatures, while maintaining the non-gelatinised state. This allows for a shorter cooling period before starch is added and less energy consumption in the form of possible cooling steps, and therefore, a more efficient production process. Moreover the extension of the temperature window between jellification of the gelling agent and starch gelatinization requires less temperature control restrictions between starch incorporation and filling, allowing for more flexibility on the line.
Starch types with a relatively high gelatinization point may be preferred in the present invention, to maximize the temperature difference between the temperature at which non-gelatinised starch can be added and the temperature at which the food concentrate solidifies (gelling point of the gelling agent), to increase manufacturing flexibility.

In step d) of the process, NaCl and liquid polyol are added. NaCl is added in a total amount of from 2 wt% to 15 wt%. Liquid polyol is added in a total amount of from 5 wt% to 60 wt%. The NaCl and liquid polyol can be added to the mixture at anyone of steps a) to c). It may be preferred that both NaCl and liquid polyol are added in the mixture during step a), as a possible heating step during step b) might pasteurize these ingredients. Next to NaCl and liquid polyol, preferably, other ingredients like taste imparting components and colorants might be added during step d). Preferably, all ingredients, except for the starch, are added during step a). Addition of ingredients after step b) might require a high shear mixing because of a viscosity increase, which may not be preferred.

In step e), the mixture is allowed to set to a gel. Step e) might comprise a cooling step, wherein the packaged concentrate is cooled, preferably to a temperature lower than the gelling temperature of the gelling agent used in the mixture of step a). Alternatively, the mixture is allowed to cool below its gelling temperature. The time required for setting to a gel might vary depending of the gelling agent that is used.

In step f) the mixture resulting from step d) is transferred to a packaging. Step f) may be carried out after step e). This can be done for example, when the mixture of step d) is poored in mold. In the mold, the mixture can solidify. After solidification, the concentrate is transferred to a packaging in step f).
Alternatively, and preferably, step f) might be carried out before step e). In this situation, the mixture of step d) is poured in the packaging (step f). The mixture then solidifies to a gel in the packaging (step e).

A package preferably is a package selected from the group consisting of a tub, a cup, a jar, a doy pack and a stick pack. The filling of the package is preferably carried out by pouring the mixture resulting from step d) into the package.

### Use

In a further aspect the present invention relates to the use of the packaged concentrate of the present invention to prepare a sauce or a gravy. Preferably, the invention relates to the use of the packaged concentrate of the present invention to prepare a soup, a sauce or a gravy.
At least part of the packaged concentrate in the form of a gel is removed from its packaging and is preferably mixed with a liquid and dissolved in it. If preferred, the concentrate of the present invention can be added to a pan directly with sufficient amount of water, after which optional other ingredients required for the soup, sauce or gravy can be added. Preferably the liquid has a temperature higher than the dissolution/melting temperature of the gelling agent which is used in the concentrate in the form of a gel. Preferably, the temperature of the hot liquid is between 70°C and 95°C, more preferably of between 75 and 90°C. During dissolving, but preferably after dissolving, the mix of the concentrate of the present invention and the aqueous liquid is preferably heated or heating is continued to cook-up the mixture. Continuous heating improves dissolution of the concentrate in the form of a gel and induces the viscosity increase as a consequence of gelatinization of the starch. It might be preferred that the concentrate in the form of a gel is first dissolved in the aqueous liquid, preferably in water, of a temperature of below 95°C, before cooking up. Cooking up is preferred to achieve the final viscosity. An optimal preparation mode is dependent on the type of gelling agent used, on the gel strength, the exchange surface area between gel and the aqueous liquid, on the gelatinisation temperature of the starch, and on further starch characteristics of the starch which is used. However, it is in the art of a skilled artisan to find out what the optimal temperature and heating time is for a specific food concentrate. A preferred cooking time may be between 20 seconds and 5 minutes, preferably between 30 seconds and 3 minutes, more preferably between 45 seconds and 1.5 minute.
In case of a hot pour-over application, like a viscous sauce or a gravy, a starch with a gelatinisation temperature of much less than 100°C is preferred, like for example native potato starch. This is preferably combined with a gel system which dissolves quickly, like for example gelatin. A person of average skill is able to optimize the food concentrate depending on the preferred preparation mode or preparation requirements or the desired application for the consumer.

Hence, preferably the present invention relates to a process to provide a liquid ready-to-eat food product, comprising the steps of:
a) providing a packaged food concentrate of the present invention,
b) removing at least part of the packaged food concentrate from its packaging,
c) dissolving at least part of the food concentrate in an aqueous liquid, to result in a mixture,
d) heating the mixture resulting from step c) at a temperature higher than the melting temperature of the gelling agent and higher than the gelatinisation temperature of the starch, achieving a viscosity increase of the mixture,
to result in a liquid ready to eat food product.

In a further aspect, the present invention relates to a ready-to-eat food product obtainable by the process as described above.

The concentrate according to the present invention is preferably diluted in liquid in a ratio of between 2 to 40 times, preferably of between 3 and 20 times, more preferably of between 4 and 10 times, based on the weight of the concentrate.

The viscosity of the ready-to-eat product resulting after dilution of the concentrate according to the invention is preferably higher than 20 mPas, more preferably higher than 40 mPas, even more preferably higher than 50 mPas, most preferably higher than 60 mPas and is preferably lower than 350 mPas, more preferably lower than 250 mPas, even more preferably lower than 200 mPas, and most preferably lower than 150 mPas and can be preferably between 20 and 350 mPas, more preferably between 40 and 250 mPas, even more preferably between 50 and 200 mPas, and most preferably between 50 and 150 mPas. The viscosity can be measured in the following way: the equivalent of one portion (weight depending on the recipe) is dissolved into 240 g of tab water at a temperature of around 80-90°C, in sauce pan of 165 mm diameter, while stirring with a whisk. When dissolved the resulting sauce is heated further and cooked gently during 1 min (final amount of sauce should be around 250ml, no water equilibration). Part of the homogenized sauce is transferred into a Bohlin CVO rheometer with a C25 probe. The product is cooled down to 80°C under a shear rate of 50 rpm and is further sheared for 3 min at this temperature. The viscosity at 80°C represents the average of 11 values of viscosities measured at this temperature during the 3 min.

The salt content of the diluted product is preferably in the range of from 5 to 17g/liter, more preferably of from 7 to 15 g/liter most preferably of from 8 to 13g/liter.

The starch content of the diluted product is preferably in the range of from 10 to 50 g/liter, more preferably of from 15 to 40 g/liter most preferably of from 20 to 40 g/liter.

Preferably, the food concentrate of the present invention results after dissolution in an aqueous liquid of 2 to 40 times, preferably of between 3 and 20 times, more preferably of between 4 and 10 times dissolution in a ready to eat food product showing a salt content which is preferably of from 5 to17g/liter, more preferably of from 7 to 15 g/liter and most preferably of from 8 to 13g/liter, and a starch content of preferably from 10 to 50 g/liter, more preferably of from 15 to 40 g/liter, most preferably of from 20 to 40 g/liter.

### Examples

The present invention is exemplified by the following examples:

### Example 1

### Process

Recipes 1a, 1b and 1c (see table 1) have been processed on labscale with the following process (batch size: 1,5kg):
Dry ingredients (salt, gelling agent (xanthan gum, locust bean gum, yeast extract(s), dry taste imparting components, colourants) were weighed and pre-mixed. Starch was kept separate from the other dry ingredients. Water (at around 40 °C), glycerol (if present) and beef extract were mixed into the powder mix (starch not included) using a whisk to homogenize. Melted fat was additionally mixed with a whisk into the mixture. The total weight (including bowl and whisk) was measured. The mixture was heated on a water bath up to 83 °C while mixing with a whisk, to activate the gelling agent. The mixture was kept at 83 °C for 3 min to simulate a pasteurisation step. The total weigth before and after heat treatment was compared and the amount of water lost during the process was added. Then, high shear mixing was applied using an Ultra-Turax (4000 rpm) during 1 min. The mixture was kept at ambient temperature and allowed to cool down to 70 °C (a temperature lower than the gelatinization temperature of the starch used). Then the starch was added by progressively mixing with a hand mixer (Krups) and tubs and plastic pots were filled and sealed at a minimum filling temperature of 60°C. The samples were allowed to cool to solidify.

**Table 1. Recipes of Example 1. (C.Ex.: Comparative Example)**

| **(wt% on total product)** | **C.Ex. 1a (no starch, no glycerol)** | **C.Ex. 1b (starch, no glycerol)** | **Example 1c (starch + glycerol)** |
|---|---|---|---|
| Added Water | 50,4 | 36,2 | 30,1 |
| Starch (corn starch native powder, 11% moisture) | 0,0 | 28,2 | 23,4 |
| Glycerol | 0,0 | 0,0 | 16,7 |
| Added Salt | 7,8 | 5,6 | 4,7 |
| Xanthan gum | 0,32 | 0,23 | 0,29 |
| Locust bean | 0,32 | 0,23 | 0,29 |
| Beef extract 65° Bx (35% water, 8% salt) | 6,11 | 4,39 | 3,64 |
| Dry yeast extract(s) (5,5% salt) | 7,29 | 5,23 | 4,35 |
| Beef fat | 5,04 | 3,62 | 3,01 |
| Other dry taste imparting components (22,7 % salt) | 18,77 | 13,48 | 11,20 |
| Colourant(s) | 3,92 | 2,82 | 2,34 |
| ***Total*** | ***100*** | ***100*** | ***100*** |
| Salt content in the application (g/L) | 11,6 | 11,6 | 11,6 |
| Starch content in the application (g/L) | 0,0 | 28,0 | 28,0 |
| Aw | 0,72 | 0,79 | 0,79 |
| Appearance (gel or paste?) | Gel | Paste | Gel |

Comparative example 1a shows a food concentrate in the form of a shape stable gel which does not contain starch.
Comparative example 1b shows a food concentrate wherein 28% of starch has been added. The amount of xanthan gum and locust bean gum was kept constant (1.22 % based on the liquid content) and the Aw was below 0.80. The gel structure was lost and the product had the appearance and the texture of a paste which was neither shape stable nor elastic.
Example 1c, according to the invention, shows that when glycerol is included in the formulation, a food concentrate in the form of a shape stable gel was obtained which showed elasticity upon deformation. The concentrations of xanthan gum, and locust bean gum were constant (1.22 % based on the liquid content) and the Aw was below 0.80. Comparative example 1a and example 1c showed a smooth and glossy gel appearance. After dissolution, the samples resulted in an equal amount of salt and starch in the final application.

### Example 2

Example 2 shows recipes according to the invention, comprising different levels of glycerol.
Recipes 2a and 2b were prepared on labscale on an Unimix LM6 with the following process (batch size: 5,5kg):
The liquid components (water, glycerol) were added into the mixing vessel. The mixture was heated up to 75°C while applying stirring (150 rpm) and homogenizing (5000 rpm) (both stirring and homogenizing units were used over the whole process). Pre-mixed dry ingredients (except starch) were added into the mixture at 75°C and the product was further heated during homogenization to allow dilution of the whole powder mix into water. After a pasteurization of 4 min at 85°C, the mixture was cooled down. Corn starch native powder was added at 68°C (temperature lower than gelatinization point of the starch) and homogenized during 3 min at 8000 rpm. The product was filled into containers immediately afterwards (filling temperature: 62-63°C), followed by sealing and leaving to cool to room temperature.

Recipe 2c (gelling agent: gelatine): A process similar to that used for recipes 2a and 2b was used, but with different temperatures. Dry ingredient (except for starch) were added at 60°C. Pasteurization was applied during 10 min at 70°C. After pasteurization, the mixture was cooled down to 40°C before addition of starch at this temperature. After filling the samples in a packaging,, they were placed in the fridge for one night to jellify.

A gel texture could be observed at a concentration of 5, 50 and 60 wt% of glycerol respectively.

| Ingredients Wt% | Example 2a | Example 2b | Example 2c |
|---|---|---|---|
| Added water | 38.6 | 30.0 | 21.0 |
| Starch (corn starch native, 11 % moisture) | 12.0 | 12.0 | 12.0 |
| Glycerol | 5.0 | 50.0 | 60.0 |
| Added salt | 11.5 | 2.0 | 2.0 |
| Gelling agent | 0.48 Xanthan, LBG (Ratio 1:1) | 0.84 Xanthan, LBG (Ratio 1:1) | 2.8 Gelatine 250 Bloom |
| Dry yeast extract (s) (0% salt) | 15.4 | 2.0 | 0.6 |
| Other dry taste imparting components (5.3% salt) | 11.9 | 2.4 | 1.4 |
| Colourant(s) | 5.2 | 0.7 | 0.2 |
| *Total* | 100 wt% | 100 wt% | 100 wt% |
| | | | |
| Total water | 40.0 | 31.5 | 22.7 |
| Starch (calculated on dry substance) | 10.6 | 10.6 | 10.6 |
| Ratio starch:salt | 0.9:1 | 4.8:1 | 4.8:1 |
| a_{w} | 0.74 | 0.68 | 0.57 |
| Texture | Shape stable gel | Shape stable gel | Shape stable gel |
| Gel strength (g / 10 mm depth) | 18.0 ± 0.7 | 75.4 ± 17.8 | |
| Stickiness | not sticky | not sticky | |
| Spoonability | good | good | |
| Fresh perception (glossiness, analysed at 20°C, after 1 week opened in the fridge (5°C/ 40 % humidity) | ++ | + | |

### Example 3

A food concentrate in the form of a gel was prepared containing the following ingredients:

| Ingredients (wt%) | Beef |
|---|---|
| Added water | 34.3 |
| Heat moisture treated potato starch agglomerates (13.8% moisture) | 24.3 |
| Glycerol | 15.4 |
| Added salt | 5.7 |
| Beef extract (65°Brix, 35% water, 8% salt) | 2.9 |
| Yeast extract(s) (6.2% salt) | 3.5 |
| Beef fat | 2.4 |
| Other taste imparting components (29.1 % salt) | 9.1 |
| Xanthan gum | 0.22 |
| colorants | 1.9 |
| Locust bean gum | 0.22 |
| Total | 100 |
| | |
| Total water | 38.7 |
| Total salt | 8.8 |
| Ratio starch:salt | 2.4:1 |
| % gelling agent/liquid phase | 0.81 |
| Aw | 0.75 |
| Gel strength (g) (at 20°C) | 36.6 |

Example 3 was prepared on pilot plant scale using Fryma Romaco Maxx D vessel of 25L and a Brogtec vessel of 25L equipped with a simple stirrer and a double jacket, with the following process (batch size: 15kg): The liquid components (water, glycerol, beef extract) were filled into a Fryma vessel. The mixture was heated up to 55°C while applying stirring (30 rpm) and homogenizing (2500 rpm) (both, stirring and homogenizing units were used over all process steps taking place in the Fryma device). Pre-mixed dry ingredients (yeast extract(s), colourant(s), other dry taste imparting components and gelling agents xanthan gum and locust bean gum) (except starch) were sucked into the vessel at around 55°C and the product was further homogenized under vacuum (-400 mbar) while heating. Melted fat (at around 80°C) was sucked using vacuum (-300 mbar) into the mixture at 85°C and homogenized during 2 min. After a pasteurization of 4 min at 85°C, the mixture was cooled down to 60°C in the same vessel. The mixture was immediately transferred to the Brogtec vessel with a double jacket, pre-heated at 60°C. Starch was added progressively into the mixture at a temperature of 56°C under stirring (60 rpm). Stirring was applied further after addition, during 4 min. The product was filled into containers immediately afterwards (filling temperature: 55-60°C), followed by sealing and leaving to cool at 5°C for one night to solidify. The product was stored at ambient temperature afterwards.
The final product (at ambient temperature) was a shape stable gel, which showed good spoonability. After storage for 1 week at 5 C°, with opened packaging, the product still showed a smooth and glossy surface.

Viscosity measurement: The equivalent of one portion (here 37 g) was dissolved into 240 g of tab water at a temperature of around 80-90°C, in a saucepan of 165 mm diameter, while stirring with a whisk. When dissolved, the resulting sauce was heated further and cooked gently during 1 min (final amount of sauce was around 250 ml, no water equilibration). Part of the homogenized sauce was transferred into a Bohlin CVO rheometer with a C25 probe. The product was cooled down to 80°C under a shear rate of 50 rpm and was further sheared for 3 min at 80°C. The viscosity at 80°C represents the average of 11 values of viscosities measured at this temperature during the 3 min. The viscosity at 80°C of the ready-to-eat product was 70 mPas.

### Example 4

A food concentrate in the form of a gel was prepared containing the following ingredients:

| Ingredients (wt%) | Beef |
|---|---|
| Added water | 31.0 |
| Heat moisture treated starch (16% moisture) | 22.0 |
| Glycerol | 23.3 |
| Added salt | 3.7 |
| Beef extract (65°Brix, 35% water, 8% salt) | 2.7 |
| Yeast extract(s) (7.8% salt) | 3.7 |
| Beef fat | 2.1 |
| Other taste imparting components (26.2% salt) | 8.0 |
| Gelatin (250 Bloom) | 2.0 |
| colorants | 1.7 |
| Total | 100 |
| | |
| Total water | 35.4 |
| Total salt | 6.3 |
| Ratio starch:salt | 3.0:1 |
| % gelling agent/liquid phase | 3.4 |
| Aw | 0.75 |
| Gel strength (g) (at 20°C) | 46.9 |

Example 4 was prepared on pilot plant scale using Fryma Romaco Maxx D vessel of 25L and a Brogtec vessel of 25L equipped with a simple stirrer and a double jacket with the following process (batch size: 15kg): The liquid components (water, glycerol, beef extract) were filled into the Fryma vessel. The mixture was heated up to 55°C while applying stirring (30 rpm) and homogenizing (2000 rpm) (both stirring and homogenizing units were used over all process steps taking place in the Fryma device). Pre-mixed dry ingredients (yeast extract(s), colourant(s), other dry taste imparting components and gelatin) (except starch) were sucked into the vessel under vacuum (-400 mbar) at around 55°C and the product was further homogenized during 3 min while heating. Melted fat (at around 80°C) was sucked using vacuum (-300 mbar) into the mixture at 78°C and homogenized during 2 min at 1000 rpm. After a pasteurization of 10 min at 75°C, the mixture was cooled down to 40°C in the same vessel. The mixture was immediately transferred to the Brogtec vessel with a double jacket pre-heated at 40°C. Starch has been added progressively into the mixture at a temperature of 39°C under stirring (60 rpm). Stirring was applied further after addition, during 5 min. The product was filled into containers immediately afterwards (filling temperature: 35-38°C), followed by sealing and leaving to cool at 5°C for one night to solidify. The product was stored at 20°C afterwards.
The final product at 20°C was a shape stable gel.

Viscosity measurement: The viscosity of the product (41 g) diluted in water was measured according to the method described in Example 3. The viscosity of the ready-to-eat product at 80°C was 151 mPas.

### Example 5

A food concentrate in the form of a gel was prepared containing the following ingredients:

| Ingredients (wt%) | Veal |
|---|---|
| Added water | 34.3 |
| Corn starch native powder (11 % moisture) | 24.3 |
| Glycerol | 16.0 |
| Added salt | 5.8 |
| Veal extract (48% water, 12% salt) | 2.7 |
| Yeast extract(s) (6.2% salt) | 4.4 |
| Beef fat | 2.9 |
| Other taste imparting components (27.8% salt) | 8.4 |
| Xanthan gum | 0.22 |
| Locust bean gum | 0.22 |
| colorants | 0.7 |
| Total | 100 |
| | |
| Total water | 38.3 |
| Total salt | 8.8 |
| Ratio starch:salt | 2.5:1 |
| % gelling agent/liquid phase | 0.82 |
| Aw | 0.76 |
| Gel strength (g) (at 20°C) | 66.5 |

Example 5 was prepared on pilot plant scale using Fryma Romaco Maxx D vessel of 25L (batch size: 15kg): The liquid components (water, glycerol and veal extract) were charged into the Fryma vessel. The mixture was heated up to 50°C while applying stirring (30 rpm) and homogenizing (2500 rpm) (both stirring and homogenizing units were used over all process steps taking place in the Fryma device). Pre-mixed dry ingredients (yeast extract(s), colourant(s), other dry taste imparting components and gelling agents xanthan gum and locust bean gum) (except starch) were added into the vessel at around 55°C, vacuum (-400 mbar) was shortly applied to avoid the presence of air in the mixture, and the product was further homogenized while heating. Melted fat (at around 80°C) was sucked using vacuum (-300 mbar) into the mixture at 82°C and homogenized under vacuum. After a pasteurization of 4 min at 85°C, the mixture was cooled down. Starch powder was added at 68°C (temperature lower than gelatinization point of the starch), vacuum was shortly applied (-400 mbar), and the mixture was homogenized during 4 min at 2500 rpm. The product was filled into containers immediately afterwards (filling temperature: 60-67°C), followed by sealing and leaving to cool to room temperature.

The resulting product after at least one night of storage, was a shape stable gel, which showed good spoonability. After storage for 1 week at 5 C°, with opened packaging, the product showed a smooth and glossy appearance.

The product (37 g) was diluted in water and the viscosity of the end product was measured according to the method described in Example 3. The viscosity of the end product at 80°C was 75 mPas.

### Example 6

A food concentrate in the form of a gel was prepared containing the following ingredients:

| Ingredients (wt%) | Chicken |
|---|---|
| Added water | 29.5 |
| Waxy corn starch powder (15% moisture) | 22.2 |
| Glycerol | 16.3 |
| Added salt | 6.2 |
| chicken extract (30 °Brix, 76% water, 1.5% salt) | 8.3 |
| Yeast extract(s) (18% salt) | 1.6 |
| Chicken fat | 2.6 |
| Other taste imparting components (17.2% salt) | 11.4 |
| Xanthan gum | 0.26 |
| Locust bean gum | 0.26 |
| colorants | 1.4 |
| Total | 100 |
| | |
| Total water | 39.1 |
| Total salt | 9.0 |
| Ratio starch:salt | 2.1:1 |
| % gelling agent/liquid phase | 0.94 |
| Aw | 0.76 |
| Gel strength (g) (at 20°C) | 58.7 |

Example 6 was prepared according to the method described in Example 5, with a change in the temperature of starch addition, as follows:
Starch powder was added at 57,7°C (temperature lower than gelatinization point of the starch), vacuum was shortly applied (-400 mbar), and the mixture was homogenized during 4 min at 2500 rpm. The product was filled into containers immediately afterwards (filling temperature: 56-60°C), followed by sealing and leaving to cool to room temperature.

The resulting product was a shape stable gel, which showed good spoonability. After storage for 1 week at 5 C°, with opened packaging, the product showed a smooth and glossy appearance.

### Example 7

A food concentrate in the form of a gel was prepared containing the following ingredients:

| Ingredients (wt%) | beef |
|---|---|
| Added water | 36.1 |
| Pea starch native (13% moisture) | 20.5 |
| Glycerol | 16.2 |
| Added salt | 6.0 |
| beef extract (65°Brix, 35% water, 8% salt) | 3.1 |
| Yeast extract(s) (6.2% salt) | 3.7 |
| Beef fat | 2.6 |
| Other taste imparting components (22.9% salt) | 9.5 |
| Xanthan gum | 0.23 |
| Locust bean gum | 0.23 |
| colorants | 2.0 |
| Total | 100 |
| | |
| Total water | 39.8 |
| Total salt | 9.2 |
| Ratio starch:salt | 1.9:1 |
| % gelling agent/liquid phase | 0.82 |
| Aw | 0.75 |
| Gel strength (g) (at 20°C) | 60.5 |

Example 7 was prepared on labscale on an Unimix LM6 with the following process (batch size: 3,5kg):
The liquid components (water, glycerol and beef extract) were charged into the mixing vessel. The mixture was heated up to 75°C while applying stirring (100 rpm) and homogenizing (5000 rpm) (both stirring and homogenizing units were used over the whole process). Pre-mixed dry ingredients (yeast extract(s), colourant(s), other dry taste imparting components and gelling agents xanthan gum and locust bean gum) (except starch) were sucked into the vessel at 75°C and the product was further homogenized under vacuum (-400 mbar) during 3 min to allow dilution of the whole powder mix into water. Fat was added and homogenized under vacuum (-400 mbar) during 2 min. After a pasteurization of 4 min at 85°C, the mixture was cooled down. Starch powder was added at 60°C (temperature lower than gelatinization point of the starch) and homogenized during 3 min at 5000 rpm (1min vacuum (-350 mbar) was applied). The product was filled into containers immediately afterwards (filling temperature: 56-60°C), followed by sealing and leaving to cool to room temperature.

The product was a shape stable gel, which showed good spoonability.

The viscosity of the ready to eat product was measured after dilution of the product (35.2 g) in water, according to the method described in Example 3. The viscosity of the ready to eat product at 80°C was 22 mPas.

## Claims

1. A packaged food concentrate in the form of a gel comprising, based on the weight of the total food concentrate without the packaging:
• from 2 wt% to 15 wt% of NaCl,
• water,
• an effective amount of gelling agent,
• from 5 wt% to 60 wt% of a liquid polyol,
• non-gelatinised starch,
wherein the gelling agent is present in an amount of from 0.1 to 20 wt%,
based on the weight of the water and liquid polyol contents taken together.

2. Packaged food concentrate according to claim 1, wherein the concentrate has a water activity of between 0.5 and 0.8.

3. Packaged food concentrate according claim 1 wherein the ratio of non-gelatinised starch to salt is from 0.8:1 to 10:1, preferably from 1.5:1 to 6:1.

4. Packaged food concentrate according to any one of the preceding claims, wherein the amount of water is from 20 wt% to 45 wt%, based on the weight of the total concentrate.

5. Packaged food concentrate according to any one of the preceding claims, wherein the gelling agent is selected from the group consisting of gelatine, agar-agar, pectin, glucomannan, carrageenan, galactomannan in combination with xanthan gum, glucomannan in combination with xanthan gum, glucomannan in combination with carrageenan, glucomannan in combination with agar-agar, galactomannan in combination with carrageenan, galactomannan in combination with agar agar.

6. Packaged food concentrate according to any one of the preceding claims, wherein the gelling agent is selected from the group consisting of a combination of xanthan gum and a glucomannan, a combination of xanthan gum and a galactomannan, gelatin.

7. Packaged food concentrate according to any one of the preceding claims, wherein the amount of non-gelatinised starch is from 10 to 50 wt%.

8. Packaged food concentrate according to any one of the preceding claims, wherein the liquid polyol is selected from the group consisting of glycerol, polypropylene glycol, tri-acetate and mixtures thereof.

9. Packaged food concentrate according to any one of the preceding claims, wherein the weight of the food concentrate is from 2 g to 200 g, preferably from 10g to 100g, most preferably from 20 g to 50 g.

10. Packaged food concentrate according to any one of the preceding claims, wherein the food concentrate is a concentrate for a sauce, a gravy or a soup.

11. Packaged food concentrate according to any one of the preceding claims, wherein dilution of the food concentrate in water, in a ratio of from 1:2 to 1:40, more preferably of from 1:3 to 1:20 results in a ready-to-eat product with a viscosity at 80 °C, under a shear rate of 50 rpm, of between 20 and 350 mPa.s.

12. A process for preparing a packaged food concentrate in the form of a gel, comprising
• from 2 wt% to 15 wt% of NaCl,
• water,
• an effective amount of gelling agent,
• from 5 wt% to 60 wt% of a liquid polyol,
• non-gelatinised starch,
wherein the gelling agent is present in an amount of from 0.1 to 20 wt%, based on the weight of the water and liquid polyol contents taken together,
the process comprising the steps of:
a) preparing a mixture comprising:
- water,
- an effective amount of gelling agent,
b) activating the gelling agent, wherein the gelling agent is activated by heating in case the gelling agent requires heat activation
c) adding the non-gelatinised starch to the mixture at a temperature of the mixture which is lower than the gelatinisation temperature of the non-gelatinised starch,
d) adding NaCl in a total amount of from 2 wt% to 15 wt%, and liquid polyol in a total amount of from 5 wt% to 60 wt%, to the mixture at anyone of steps a) to c)
e) allow setting of the mixture resulting from step d),
f) filling a package with the mixture resulting from step d),
to form a packaged food concentrate in the form of a gel.

13. Use of the packaged food concentrate according to any one of claims 1 to 11 for preparing a sauce or a gravy or a soup.

14. A process to provide a liquid ready to eat food product comprising the steps of:
a) providing a packaged food concentrate according to any one of claims 1 to 11,
b) removing at least part of the packaged food concentrate from its packaging,
c) dissolving at least part of the food concentrate in an aqueous liquid, to result in a mixture,
d) heating the mixture resulting from step c) at a temperature higher than the melting temperature of the gelling agent and higher than the gelatinization temperature of the starch, achieving a viscosity increase of the mixture, to result in a liquid ready to eat food product.

## Patentansprüche

1. Verpacktes Lebensmittelkonzentrat in Form eines Gels, umfassend, bezogen auf das Gewicht des gesamten Lebensmittelkonzentrats ohne Verpackung:
• von 2 Gew.-% bis 15 Gew.-% NaCl,
• Wasser,
• eine wirksame Menge Geliermittel,
• von 5 Gew.-% bis 60 Gew.-% eines flüssigen Polyols,
• nichtgelierte Stärke,
wobei das Geliermittel in einer Menge von 0,1 bis 20 Gew.-%, bezogen auf das Gewicht des Gehalts an Wasser und an flüssigem Polyol, zusammengenommen, vorliegt.

2. Verpacktes Lebensmittelkonzentrat nach Anspruch 1, wobei das Konzentrat eine Wasseraktivität zwischen 0,5 und 0,8 aufweist.

3. Verpacktes Lebensmittelkonzentrat nach Anspruch 1, wobei das Verhältnis von nichtgelierter Stärke zu Salz von 0,8:1 bis 10:1, vorzugsweise von 1,5:1 bis 6:1, beträgt.

4. Verpacktes Lebensmittelkonzentrat nach irgendeinem der vorhergehenden Ansprüche, wobei die Menge von Wasser von 20 Gew.-% bis 45 Gew.-%, bezogen auf das Gewicht des gesamten Konzentrats, beträgt.

5. Verpacktes Lebensmittelkonzentrat nach irgendeinem der vorhergehenden Ansprüche, wobei das Geliermittel aus der Gruppe ausgewählt ist, die aus Gelatine, Agar-Agar, Pektin, Glucomannan, Carrageen, Galactomannan in Kombination mit Xanthangummi, Glucomannan in Kombination mit Xanthangummi, Glucomannan in Kombination mit Carrageen, Glucomannan in Kombination mit Agar-Agar, Galactomannan in Kombination mit Carrageen, Galactomannan in Kombination mit Agar-Agar besteht.

6. Verpacktes Lebensmittelkonzentrat nach irgendeinem der vorhergehenden Ansprüche, wobei das Geliermittel aus der Gruppe ausgewählt ist, die aus einer Kombination von Xanthangummi und einem Glucomannan, einer Kombination von Xanthangummi und einem Galactomannan, Gelatine besteht.

7. Verpacktes Lebensmittelkonzentrat nach irgendeinem der vorhergehenden Ansprüche, wobei die Menge der nichtgelierten Stärke von 10 bis 50 Gew.-% beträgt.

8. Verpacktes Lebensmittelkonzentrat nach irgendeinem der vorhergehenden Ansprüche, wobei das flüssige Polyol aus der Gruppe ausgewählt ist, die aus Glycerin, Polypropylenglykol, Triacetat und Mischungen davon besteht.

9. Verpacktes Lebensmittelkonzentrat nach irgendeinem der vorhergehenden Ansprüche, wobei das Gewicht des Lebensmittelkonzentrats von 2 g bis 200 g, vorzugsweise von 10 g bis 100 g, höchst bevorzugt von 20 g bis 50 g, beträgt.

10. Verpacktes Lebensmittelkonzentrat nach irgendeinem der vorhergehenden Ansprüche, wobei das Lebensmittelkonzentrat ein Konzentrat für eine Soße, eine Bratensoße oder eine Suppe ist.

11. Verpacktes Lebensmittelkonzentrat nach irgendeinem der vorhergehenden Ansprüche, wobei das Verdünnen des Lebensmittelkonzentrats in Wasser, in einem Verhältnis von 1:2 bis 1:40, bevorzugter von 1:3 bis 1:20, zu einem verzehrfertigen Produkt einer Viskosität bei 80°C, unter einer Scherrate von 50 U/min, zwischen 20 und 350 mPa.s führt.

12. Verfahren zur Herstellung eines verpackten Lebensmittelkonzentrats in Form eines Gels, umfassend
• von 2 Gew.-% bis 15 Gew.-% NaCl,
• Wasser,
• eine wirksame Menge Geliermittel,
• von 5 Gew.-% bis 60 Gew.-% eines flüssigen Polyols,
• nichtgelierte Stärke,
wobei das Geliermittel in einer Menge von 0,1 bis 20 Gew.-%, bezogen auf das Gewicht des Gehalts an Wasser und flüssigem Polyol, zusammengenommen, vorliegt,
wobei das Verfahren die Schritte umfasst:
a) Herstellen einer Mischung, umfassend:
- Wasser,
- eine wirksame Menge Geliermittel,
b) Aktivieren des Geliermittels, wobei das Geliermittel in dem Falle durch Erhitzen aktiviert wird, dass das Geliermittel eine Hitzeaktivierung erfordert,
c) Zugeben der nichtgelierten Stärke zu der Mischung bei einer Temperatur der Mischung, die niedriger als die Gelatinierungstemperatur der nichtgelierten Stärke ist,
d) Zugeben von NaCl in einer Gesamtmenge von 2 Gew.-% bis 15 Gew.-% und flüssigem Polyol in einer Gesamtmenge von 5 Gew.-% bis 60 Gew.-% zu der Mischung in irgendeinem der Schritte a) bis c),
e) Abbindenlassen der Mischung, die aus Schritt d) resultiert,
f) Abfüllen einer Verpackung mit der Mischung, die aus Schritt d) resultiert, um ein verpacktes Lebensmittelkonzentrat in Form eines Gels zu bilden.

13. Verwendung des verpackten Lebensmittelkonzentrats nach irgendeinem der Ansprüche 1 bis 11 zur Herstellung einer Soße oder einer Bratensoße oder einer Suppe.

14. Verfahren zum Bereitstellen eines flüssigen verzehrfertigen Lebensmittelprodukts, umfassend die Schritte:
a) Bereitstellen eines verpackten Lebensmittelkonzentrats nach irgendeinem der Ansprüche 1 bis 11,
b) Entnehmen mindestens eines Teils des verpackten Lebensmittelkonzentrats aus seiner Verpackung,
c) Lösen mindestens eines Teils des Lebensmittelkonzentrats in einer wässrigen Flüssigkeit, um eine Mischung zu liefern,
d) Erhitzen der aus Schritt c) erhaltenen Mischung bei einer Temperatur, die höher als die Schmelztemperatur des Geliermittels und höher als die Gelatinierungstemperatur der Stärke ist, Erreichen eines Viskositätsanstiegs der Mischung, um ein flüssiges verzehrfertiges Lebensmittelprodukt zu liefern.

## Revendications

1. Concentré alimentaire emballé dans la forme d'un gel comprenant, rapporté à la masse du concentré alimentaire total sans l'emballage :
• de 2 % en masse à 15 % en masse de NaCI,
• de l'eau,
• une quantité efficace d'agent gélifiant,
• de 5 % en masse à 60 % en masse d'un polyol liquide,
• de l'amidon non-gélatinisé,
dans lequel l'agent gélifiant est présent dans une quantité de 0,1 à 20 % en masse,
rapporté à la masse des contenus en eau et en polyol liquide pris ensemble.

2. Concentré alimentaire emballé selon la revendication 1, dans lequel le concentré présente une activité d'eau de 0,5 à 0,8.

3. Concentré alimentaire emballé selon la revendication 1, dans lequel le rapport d'amidon non-gélatinisé à sel est de 0,8:1 à 10:1, de préférence de 1,5:1 à 6:1.

4. Concentré alimentaire emballé selon l'une quelconque des revendications précédentes, dans lequel la quantité d'eau est de 20 % en masse à 45 % en masse, rapporté à la masse du concentré total.

5. Concentré alimentaire emballé selon l'une quelconque des revendications précédentes, dans lequel l'agent gélifiant est choisi dans le groupe constitué de gélatine, agar-agar, pectine, glucomannane, carraghénane, galactomannane en combinaison avec de la gomme xanthane, glucomannane en combinaison avec de la gomme xanthane, glucomannane en combinaison avec du carraghénane, glucomannane en combinaison avec de l'agar-agar, galactomannane en combinaison avec du carraghénane, galactomannane en combinaison avec de l'agar-agar.

6. Concentré alimentaire emballé selon l'une quelconque des revendications précédentes, dans lequel l'agent gélifiant est choisi dans le groupe constitué d'une combinaison de gomme xanthane et d'un glucomannane, d'une combinaison de gomme xanthane et d'un galactomannane, de gélatine.

7. Concentré alimentaire emballé selon l'une quelconque des revendications précédentes, dans lequel la quantité d'amidon non-gélatinisé est de 10 à 50 % en masse.

8. Concentré alimentaire emballé selon l'une quelconque des revendications précédentes, dans lequel le polyol liquide est choisi dans le groupe constitué de glycérol, polypropylène glycol, tri-acétate et mélanges de ceux-ci.

9. Concentré alimentaire emballé selon l'une quelconque des revendications précédentes, dans lequel la masse du concentré alimentaire est de 2 g à 200 g, de préférence de 10 g à 100 g, encore mieux de 20 g à 50 g.

10. Concentré alimentaire emballé selon l'une quelconque des revendications précédentes, dans lequel le concentré alimentaire est un concentré pour une sauce, un jus de viande ou une soupe.

11. Concentré alimentaire emballé selon l'une quelconque des revendications précédentes, dans lequel une dilution du concentré alimentaire dans de l'eau, dans un rapport de 1:2 à 1:40, encore mieux de 1:3 à 1:20 résulte en un produit prêt à consommer avec une viscosité à 80°C sous une vitesse de cisaillement de 50 tr/mn, de 20 à 350 mPa.s.

12. Procédé de préparation d'un concentré alimentaire emballé dans la forme d'un gel,
comprenant,
• de 2 % en masse à 15 % en masse de NaCI,
• de l'eau,
• une quantité efficace d'agent gélifiant,
• de 5 % en masse à 60 % en masse d'un polyol liquide,
• de l'amidon non-gélatinisé,
dans lequel l'agent gélifiant est présent dans une quantité de 0,1 à 20 % en masse, rapporté à la masse des contenus en eau et en polyol liquide pris ensemble,
le procédé comprenant les étapes de :
a) préparation d'un mélange comprenant :
- de l'eau,
- une quantité efficace d'agent gélifiant,
b) activation de l'agent gélifiant, dans lequel l'agent gélifiant est activité en chauffant dans le cas où l'agent gélifiant exige une activation thermique,
c) addition de l'amidon non-gélatinisé au mélange à une température du mélange qui est inférieure à la température de gélatinisation de l'amidon non-gélatinisé,
d) addition de NaCI dans une quantité totale de 2 % en masse à 15 % en masse, et de polyol liquide dans une quantité totale de 5 % en masse à 60 % en masse, au mélange dans l'une quelconque des étapes a) à c),
e) laisser prendre le mélange résultant de l'étape d),
f) remplissage d'un emballage avec le mélange résultant de l'étape d),
pour former un concentré alimentaire emballé dans la forme d'un gel.

13. Utilisation du concentré alimentaire emballé selon l'une quelconque des revendications 1 à 11 pour préparer une sauce ou un jus de viande ou une soupe.

14. Procédé de fourniture d'un produit alimentaire prêt à consommer liquide comprenant les étapes de :
a) fourniture d'un concentré alimentaire emballé selon l'une quelconque des revendications 1 à 11,
b) prélèvement d'au moins une partie du concentré alimentaire emballé de son emballage,
c) dissolution d'au moins une partie du concentré alimentaire dans un liquide aqueux, pour résulter en un mélange,
d) chauffage du mélange résultant de l'étape c) à une température supérieure à la température de fusion de l'agent gélifiant et supérieure à la température de gélatinisation de l'amidon, réalisant une augmentation de viscosité du mélange, pour résulter en un produit alimentaire prêt à consommer liquide.
